Europäisches Patentamt

European Patent Office

Office européen des brevets

(19)

(11) Numéro de publication: **0 397 568**
**A2**

# (12) DEMANDE DE BREVET EUROPEEN

(21) Numéro de dépôt: 90401238.2

(22) Date de dépôt: **10.05.90**

(51) Int. Cl.⁵: **G01N 15/14, G01N 33/38, G01N 21/55**

(30) Priorité: **10.05.89 FR 8906131**

(43) Date de publication de la demande:
**14.11.90 Bulletin 90/46**

(84) Etats contractants désignés:
**AT BE CH DE DK ES GB GR IT LI LU NL SE**

(71) Demandeur: **ETAT FRANCAIS - LABORATOIRE CENTRAL DES PONTS ET CHAUSSEES**
**58 Boulevard Lefebvre**
**F-75732 Paris Cédex 15(FR)**

(72) Inventeur: **Guillard, Yannick**
**7, rue des Glaieuls**
**F-67310 Wasselonne(FR)**

(74) Mandataire: **Hasenrader, Hubert et al**
**Cabinet BEAU DE LOMENIE 55, rue d'Amsterdam**
**F-75008 Paris(FR)**

(54) **Procédé de contrôle d'un mélange de billes en verre et de charges utilisé notamment pour rendre les marquages routiers visibles la nuit.**

(57) La présente invention concerne un procédé de contrôle d'un mélange de billes en verre (6) et de charges (7) utilisé pour rendre les marquages routiers visibles la nuit. On soupoudre un support (2) réfléchissant avec le mélange, et on traite les images prises par un microscope (11) ayant une grande ouverture numérique en plaçant un échantillon (8) du support (2) successivement perpendiculaire à l'axe optique de l'objectif (10) et en inclinaison. Les images prises sont traitées par les techniques d'analyse d'image pour déterminer les pourcentages de billes défectueuses et de charges et la granulométrie du mélange.

FIG.3

## Procédé de contrôle d'un mélange de billes en verre et de charges utilisé notamment pour rendre les marquages routiers visibles la nuit.

La présente invention concerne un procédé de contrôle d'un mélange de billes en verre et éventuellement de charges antidérapantes utilisé notamment pour rendre les marquages routiers visibles la nuit, consistant à déterminer la granulométrie du mélange, le pourcentage des billes défectueuses par rapport aux billes saines et le pourcentage des charges antidérapantes par rapport aux billes.

Lorsque des billes en verre sont éclairées et à condition qu'elles soient sur un support réfléchissant, elles ont pour propriétés de renvoyer une partie de la lumière dans la direction où celle-ci a été émise. La quantité de lumière ainsi rétroréfléchie dépend à la fois du support, de la qualité optique des billes et de l'interface bille-support. C'est ce principe qui est utilisé pour rendre les marquages routiers visibles la nuit avec, pour seul éclairage, celui des feux des véhicules. Le support du marquage formant les marques tracées sur la chaussée ou les indications inscrites sur les panneaux de signalisation est réalisé en général par une couche de peinture ou par tout autre support ayant une certaine brillance et sur lequel des billes de verre sont susceptibles d'adhérer. Ce support du marquage est saupoudré par un mélange de billes de verre et éventuellement de charges antidérapantes.

Pour être efficace, ce mélange doit respecter un certain nombre de critères, en particulier ceux relatifs à leur granularité, à leurs défauts et à la quantité de charges antidérapantes.

Actuellement, la granulométrie du mélange est déterminée au moyen de tamis ayant des ouvertures de maille prédéterminées et on mesure le poids du mélange refusé par chaque tamis en criblant une dose de mélange. Le poourcentage du poids refusé par rapport au poids total de la dose fournit le pourcentage de refus cumulé pour un tamis donné. Le pourcentage obtenu doit être compris entre des limites de tolérance déterminées pour déclarer valable le lot du mélange.

Chaque fraction granulométrique de mélange est contrôlée visuellement par une loupe binoculaire, par exemple pour mesurer le pourcentage pondéré des billes défectueuses de la fraction étudiée, ce pourcentage doit être inférieur à 20 %.

Les charges antidérapantes mélangées avec les billes de verre sont séparées des billes par la méthode des liqueurs denses et on mesure le rapport de masse des charges et des billes.

Les méthodes actuelles présentent des problèmes d'ordre subjectif pour l'appréciation des défauts des billes et des problèmes purement techniques, notamment pour la séparation des charges et des billes.

En effet, sont considérés comme défauts :
- des billes allongées dont le rapport des diamètres extrêmes est supérieur à 1,2,
- des billes collées,
- des particules de verre présentant des arêtes vives ou des fractures,
- des billes opaques,
- des billes d'aspect latescent,
- des billes contenant une ou plusieurs inclusions gazeuses dont le diamètre est supérieur au quart du diamètre de la bille.

L'observation visuelle des billes pour séparer les billes saines des billes défectueuses selon les critères énoncés ci-dessus entraîne nécessairement des interprétations de l'observateur.

De plus, la densité des charges antidérapantes peut varier de façon telle que la méthode des liqueurs denses pour séparer les charges des billes devient inutilisable.

Enfin, les méthodes actuelles permettent de contrôler un mélange de billes de charges antidérapantes, mais ne permettent pas de contrôler un support réfléchissant saupoudré avec ce mélange.

Le but de la présente invention est de proposer une méthode de contrôle d'un mélange de saupoudrage utilisé pour rendre les marquages routiers visibles la nuit et comportant des billes de verre et éventuellement des charges antidérapantes, consistant à déterminer la granulométrie du mélange, le pourcentage des billes défectueuses par rapport aux billes saines et le pourcentage des charges par rapport aux billes, qui pallie les difficultés actuelles qui diminuent les temps du contrôle et qui soit utilisable à la fois pour un mélange de billes et de charges antidérapantes et pour un support de marquage préalablement saupoudré par un mélange de billes et de charges antidérapantes.

Le but est atteint selon l'invention par le fait que le procédé proposé est caractérisé en ce que
. on prend un échantillon d'un support auquel adhère le mélange à étudier, et préalablement saupoudré dudit mélange,
. on crée au moins une image de l'échantillon du support avec ledit mélange, saupoudré, en lumière réfléchie à travers un objectif de microscope, et
. on utilise les propriétés optiques du support, des billes saines, des billes défectueuses et des charges antidérapantes et les techniques d'analyse d'image, pour déterminer la granulométrie du mélange, le pourcentage des billes défectueuses par rapport aux billes saines et le pourcentage de charges antidérapantes par rapport aux billes à partir des images créées.

Avantageusement, on utilise un microscope dont l'ouverture numérique permet de capter la quasi totalité des rayons lumineux rétroréfléchis par les billes saines.

Grâce à cette disposition, les billes saines sont différenciées des billes défectueuses ou des charges sur les images créées, évitant ainsi les interprétations subjectives de l'observateur dans les méthodes de l'art antérieur.

Selon une caractéristique de l'invention, on crée des images de l'échantillon en plaçant l'échantillon perpendiculairement à l'axe optique de l'objectif et en l'éclairant avec une intensité lumineuse telle que, sur les images, le support apparait blanc, les billes saines apparaissent grises, les billes défectueuses et les charges antidérapantes apparaissent presque noires, et on traite ces images par les techniques d'analyse d'image pour déterminer le pourcentage de billes défectueuses par rapport aux billes saines, et la granulométrie du mélange.

On crée ensuite des images de l'échantillon en plaçant l'échantillon en inclinaison par rapport à l'axe optique de l'objectif et en l'éclairant avec une intensité lumineuse telle que, sur les images, les billes saines apparaissent blanches, le support apparaît noir, les charges antidérapantes apparaissent grises et les billes défectueuses apparaissent plus claires que les charges antidérapantes, et on traite ces images par les techniques d'analyse d'image pour déterminer le pourcentage des charges antidérapantes par rapport aux billes.

On incline l'échantillon d'un angle A égal au moins au quart de l'angle du cône de lumière défini par l'ouverture numérique du microscope.

La méthode proposée permet ainsi de différencier les charges antidérapantes des billes saines ou défectueuses, quelle que soit la densité respective des éléments du mélange.

De préférence, on utilise un microscope dont l'objectif permet d'étudier un champ ayant un diamètre voisin de 4mm et dont l'intensité lumineuse de l'éclairage est variable, associé à une caméra électronique reliée à un organe de calcul destiné à traiter les images à l'aide de programmes appropriés d'analyse d'image.

On découpe l'image en un nombre de points tel que la distance séparant deux points sur l'image corresponde à une distance d'environ 15 micromètres sur l'échantillon.

On convertit chaque image prise par la caméra en un ensemble de données binaires, chaque donnée binaire correspondant à un point de l'image et étant affectée d'un niveau de gris proportionnel à l'intensité lumineuse du point, le niveau de gris étant compris entre un minimum et un maximum correspondant respectivement au noir et au blanc.

On utilise une plage de niveau de gris compris entre un minimum de 0 et un maximum de 63.

Le pourcentage des billes ayant un diamètre inférieur à 0,125 mm devant être inférieur à 5 %, toutes les billes sont visibles sur l'image et répertoriées dans l'ensemble de données digitales. Les programmes d'analyse d'image permettent ensuite de classer ces billes par plages de grosseur correspondant aux ouvertures des mailles de la technique actuelle et de mesurer dans chaque plage les surfaces apparentes des billes saines, des billes défectueuses et des charges, ainsi que les volumes et les poids correspondants.

La présente invention concerne également un dispositif pour la mise en oeuvre du procédé caractérisé en ce qu'il comporte :

. un microscope comprenant un porte échantillon, un objectif situé au voisinage d'une partie du porte échantillon, une source lumineuse permettant d'éclairer l'échantillon à travers l'objectif, un organe de réglage de l'intensité de la source lumineuse,

. une caméra électronique associée au microscope et destinée à prendre des images de l'échantillon porté par le porte échantillon,

. une carte électronique de conversion reliée à la caméra et destinée à convertir chaque image prise par la caméra en un ensemble de données binaires,

. un organe de calcul relié à la carte électronique de conversation et destiné à traiter les ensembles de données binaires fournies par cette dernière.

D'autres avantages et caractéristiques de l'invention apparaîtront à la lecture de la description suivante faite en référence aux dessins annexés dans lesquels :

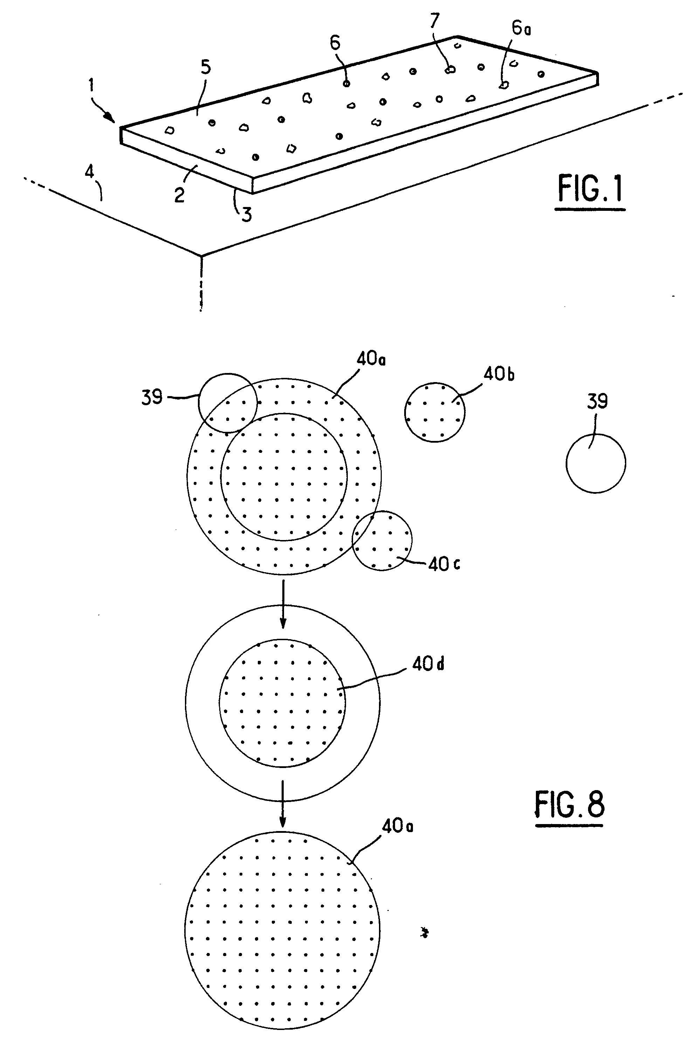

- la figure 1 représente un support saupoudré par le mélange,

- la figure 2 est un schéma du dispositif utilisé pour contrôler le mélange,

- la figure 3 montre le chemin suivi par un rayon lumineux incident par frappant une bille saine,

- la figure 4 est une courbe montrant la déviation du rayon lumineux rétroréfléchi par une bille de verre en fonction de l'angle d'incidence,

- la figure 5 montre le chemin suivi par un rayon lumineux dans un élément en verre de forme quelconque,

- la figure 6 montre un exemple d'histogramme obenu avec une image de l'échantillon,

- la figure 7 représente un graphique de la répartition des billes saines et des billes défectueuses, et

- la figure 8 montre le principe du traitement granulométrique d'une image.

Le marquage routier 1 destiné à être visible la nuit par suite de son éclairement par les phares d'un véhicule automobile comporte des marquages ou indications tracées sur la chaussée ou sur les panneaux de signalisation à l'aide d'une peinture. La couche de peinture encore fraîche est ensuite saupoudrée d'un mélange de billes de verre 6 et éventuellement de charges antidérapantes 7. Le marquage peut également être réalisé à l'aide d'un support 2 opaque et réfléchissant, sous forme d'une bande prête à l'emploi, qui présente sur sa face visible 5 des billes de verre 6 et éventuellement des charges antidérapantes et qui peut adhérer par sa face invisible 3 sur la chaussée 4 ou contre la paroi du panneau de signalisation. Les billes 6 et les charges 7 ont des diamètres inférieurs à 1 mm et de préférence, au moins 90 % des éléments du mélange saupoudré sur la face supérieure 5 du support 2 ont un diamètre compris entre 0,125 mm et 0,630 mm. Les billes 6 normalement sphériques du mélange de saupoudrage comportent en général une certaine quantité de billes défectueuses 6 ou des défauts qui nuisent à la qualité rétroréfléchissante du support 2 saupoudré par ce mélange.

Le but de la présente invention est de proposer un nouveau procédé de contrôle du mélange dont on saupoudre la couche de peinture ou qui a été utilisé pour réaliser la bande prête à l'emploi.

Pour ce faire, on prend soit un échantillon 8 de la bande prête à l'emploi, soit un échantillon 8 d'un support intermédiaire 2, opaque et réfléchissant préalablement saupoudré par le mélange à étudier.

L'échantillon 8 du support 2 saupoudré par le mélange de billes de verre 6 et éventuellement de charges antidérapantes 7 est placé sur un porte-échantillon 9 situé à proximité de l'objectif 10 d'un microscope 11 comportant une source lumineuse 12 permettant d'éclairer l'échantillon 8, ou du moins le champ à étudier, à travers l'objectif. Le microscope 11 est associé à une caméra électronique 13 qui représente l'image du champ étudié en 255 lignes de 256 points lumineux, la distance séparant deux points correspondant à une distance de 15 micromètres environ sur l'échantillon 8. L'image créée est transmise à un organe de calcul 14, un micro-ordinateur par exemple, par l'intermédiaire d'une carte électronique spécialisée qui convertit l'image en un ensemble de données, chaque donnée correspondant à un point de l'image et étant affectée d'une valeur, appelée niveau de gris, proportionnelle à l'intensité lumineuse du point considéré, et comprise entre un minimum et un maximum, par exemple 0 pour le noir et 63 pour le blanc. Le microscope 11 comporte en plus des moyens de réglage de la source lumineuse 12 sous forme de filtres et diaphragmes, et des moyens d'inclinaison de l'échantillon 8 sur le porte-échantillon 9 et de déplacement de l'échantillon 8, de manière à pouvoir en prendre des images juxtaposées.

La distinction des différents éléments de l'échantillon sur l'image créée par l'objectif 10 est régie par les phénomènes de réflexion spéculaire, de diffusion et de rétroréflexion :
- le support 2 est réfléchissant,
- les billes 6 sont à la fois réfléchissantes et rétroréfléchissantes,
- les défauts ont les mêmes propriétés que les billes saines, mais sont moins rétroréfléchissante ; ils peuvent même être diffusants,
- les charges antidérapantes 7, opaques et de couleur blanche sont diffusantes.

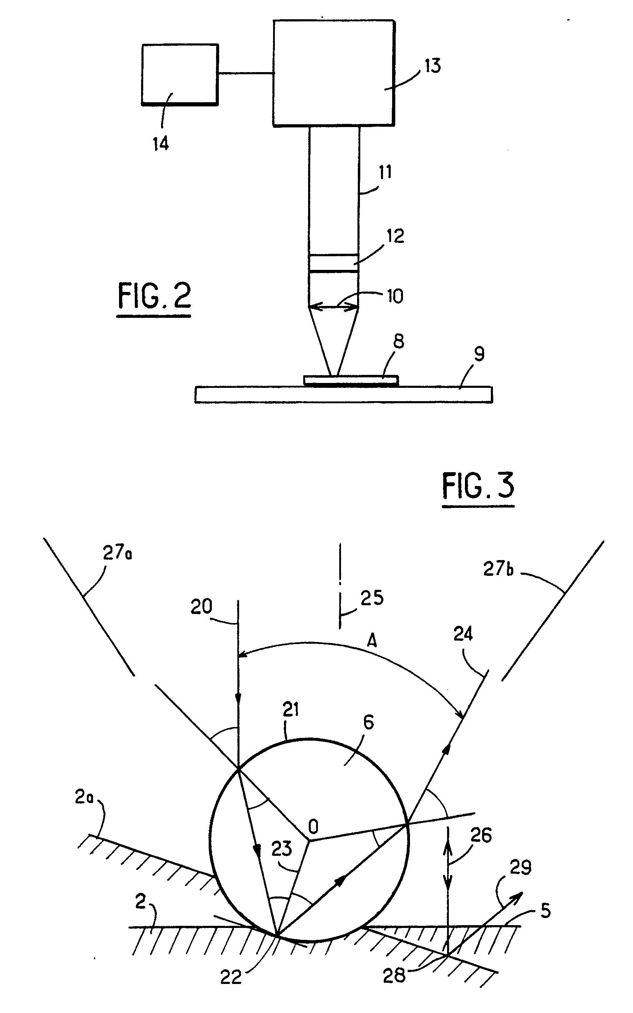

La figure 3 montre le chemin parcouru par un rayon lumineux incident 20 dirigé sensiblement à la perpendiculaire du support 2 vers une bille saine sphérique et homogène 6. Ce rayon lumineux incident 20 se réfracte sur la paroi supérieure 21 de la bille 6, puis se propage à travers la bille pour atteindre un point de contact 22 de la bille 6 et du support 2 où il se réfléchit pour repartir vers le haut de manière symétrique par rapport au rayon 23 de la bille 6 qui passe par le point de contact 22. Le rayon lumineux sortant rétroréfléchi 24 est décalé par rapport au rayon lumineux incident 20 d'un angle de déviation A égal à $(4i_2 - 2i_1)$, $i_1$ étant l'angle d'incidence du rayon lumineux 20 sur la paroi 21 de la bille 6, et $i_2$ étant l'angle de réfraction correspondant sur cette paroi 21. La relation entre $i_1$ et $i_2$ est donnée par la loi de Descartes $n_1 \sin(i_1) = n_2 \sin(i_2)$ et dépend des indices de réfraction $n_1$ et $n_2$ du milieu ambiant et du verre.

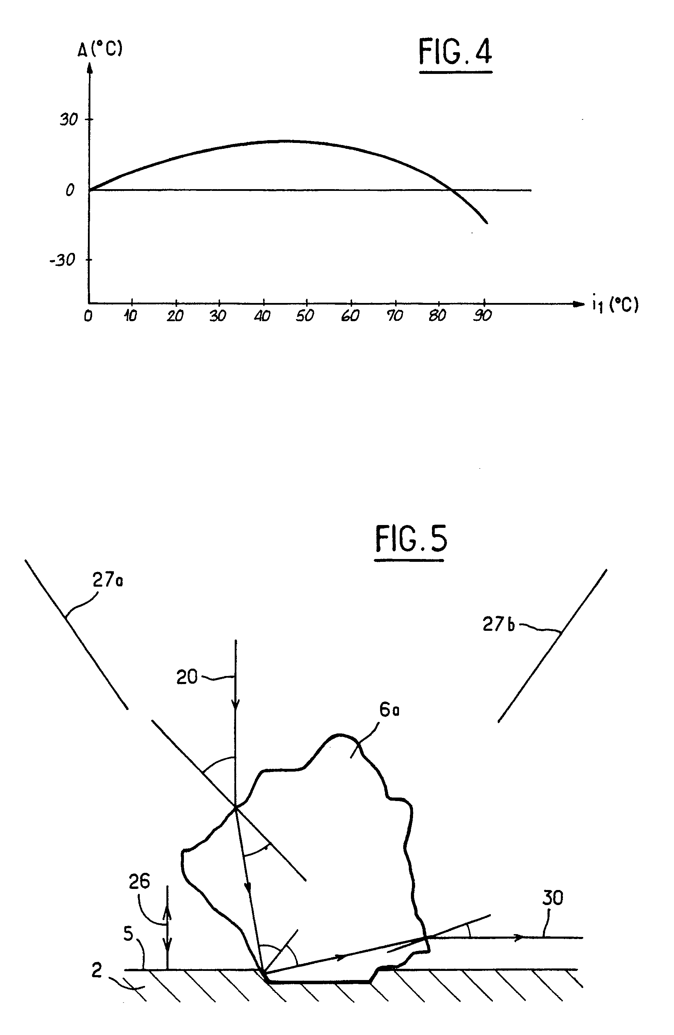

La figure 4 représente la variation de l'angle A en fonction de l'angle d'incidence $i_1$ qui varie de 0 à 90° pour un verre ayant un indice de réfraction $i_2$ égal à 1,5.

On voit que l'angle de déviation A oscille d'une vingtaine de degrés autour de l'axe optique 25 de l'objectif 10 qui, sur la figure 3, est parallèle au rayon lumineux incident 20.

La référence 26 représente un rayon lumineux venant frapper perpendiculairement la surface supérieure 5 du support 2. Ce rayon lumineux 26 est réfléchi perpendiculairement à la face supérieure 5 du support 2, avec une intensité fonction de l'indice de réflexion du support. Lorsque l'indice de réflexion du support est de 0,9, l'émergence lumineuse réfléchie est de 90 % pour le support 2 et de 80 % environ pour une bille saine 6 avec un indice de réfraction du verre de 1,5, car une partie de l'intensité lumineuse du rayon lumineux incident 20 est réfléchie au contact de la bille en verre.

Un objectif de microscope est caractérisé par son ouverture numérique et sa focale. La focale définit le grossissement, et l'ouverture numérique délimite le cône de lumière dans lequel se propagent les rayons incidents et les rayons issus de l'échantillon. Les rayons renvoyés à l'extérieur de ce cône ne contribuent pas à la reconstitution de l'image.

Les droites obliques référencées 27a et 27b sur la figure 3 représentent la délimitation du cône de lumière, et l'ouverture numérique de l'objectif 10 est choisi suffisamment grand pour que presque tous les rayons lumineux 24 sortant de la bille saine 6 soient captés et contribuent à la reconstruction de l'image. Ces rayons captés sont d'autant plus nombreux que l'indice de réfraction du verre est élevé. La valeur de l'ouverture numérique de l'objectif est choisie pour que l'angle formé par les droites 27a et 27b délimitant le cône de lumière soit voisin ou inférieur à 20°, de manière à capter la quasi-totalité des rayons lumineux rétroréfléchis par les billes saines 6.

Sur la figure 3, la référence 2a représente un support incliné par rapport à l'axe optique 25. On constate que le rayon lumineux incident 20 suit le même trajet que précédemment et donne naissance à un rayon sortant rétroréfléchi 24 qui se trouve dans le cône de lumière de l'objectif 10. Le rayon lumineux 26 frappant le support 2a au point 28 donne naissance à un rayon lumineux réfléchi 29 qui se propage vers le haut en oblique à l'extérieur du cône de lumière de l'objectif 10 et ne contribue pas à la reconstruction de l'image, lorsque l'angle d'inclinaison du support 2a par rapport à l'axe optique 25 est supérieur au quart de l'angle formé par les droites 27a et 27b qui délimitent le cône de lumière. L'angle d'inclinaison est choisi égal ou légèrement supérieur à 5, ce qui fait que le rayon lumineux réfléchi 29 est incliné d'au moins 10° par rapport à l'axe optique 25 et sort du cône de lumière. Dans ce cas, l'émergence lumineuse réfléchie est voisine de 0 % pour le support incliné 2a et de 80 % environ pour une bille saine 6.

Les billes défectueuses sont des éléments qui présentent bien souvent des arêtes vives ou des fractures qui perturbent la propagation normale des rayons réfléchis et transmis.

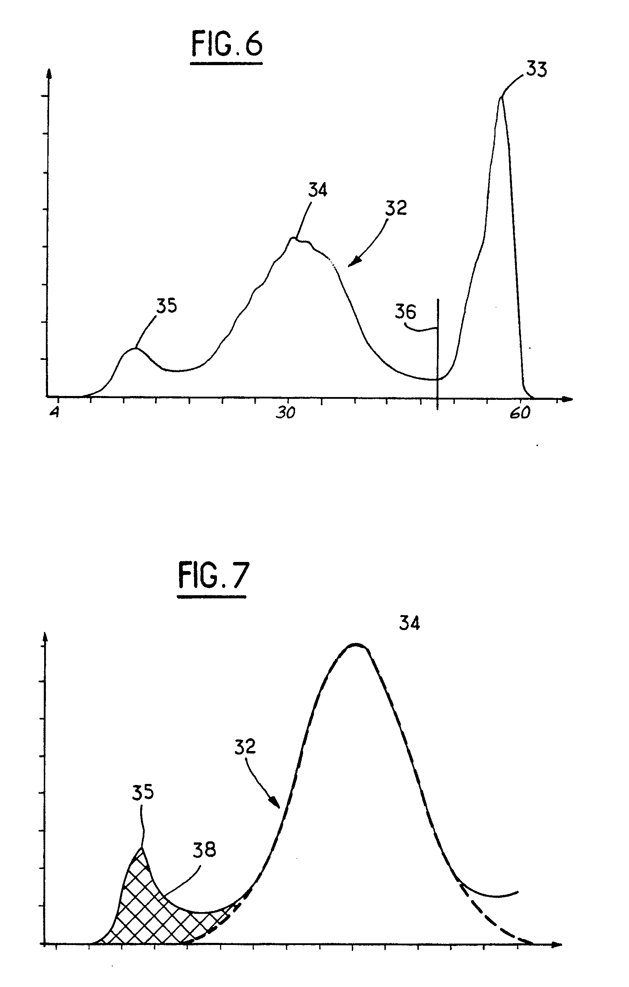

La figure 5 montre le trajet suivi par un rayon lumineux incident 20 sur un élément en verre de forme quelconque 6a, le rayon lumineux sortant 30 a une direction imprévisible.

Il est donc peu probable que les rayons lumineux sortant des défauts soient tous ou presque tous contenus dans le cône défini par l'ouverture numérique de l'objectif 10. Ainsi, la quantité de lumière rétroréfléchie par une bille défectueuse 6a et arrivant sur l'objectif 10 sera plus faible que la lumière rétroréfléchie par les billes saines 6. Seuls quelques éléments de forme ovale ou présentant des inclusions ou des satellites se comporteront un peu comme des billes saines 6.

Les charges antidérapantes 7 sont de couleur blanche, et de forme anguleuse. Elles sont de plus opaques et surtout diffusantes, lorsqu'elles sont éclairées par la source lumineuse 12 issue de l'objectif 10, elles diffusent des rayons lumineux dans toutes les directions et une faible partie de celles-ci contribue à la formation de l'image.

L'intensité de la source lumineuse 12 est réglée de telle manière que l'objet le plus clair de l'échantillon soit représenté en blanc sur l'image ; ceci est obtenu pour le support 2 placé perpendiculairement à l'axe optique 25 et pour les billes saines 6, lorsque le support 2 est incliné de 5° au moins par rapport à l'axe optique 25. L'intensité de la source lumineuse est choisie plus élevée lorsque le support 2 est incliné. Dans ces conditions, lorsque le support 2 est perpendiculaire à l'axe optique 25, le support 2 apparaît blanc sur l'image, les billes saines 6 apparaissent grises, et les billes défectueuses 6a et les charges 7 apparaissent presque noires et sont difficiles à différencier. Mais lorsque le support 2a est incliné par rapport à l'axe optique 25, et éclairé avec une intensité lumineuse supérieure, les billes saines 6 apparaissent blanches, les billes défectueuses 6a apparaissent plus claires que les charges 7 qui sont grises et le support est presque noir.

Les images vues à travers l'objectif 10 du microscope 11 permettent ainsi de différencier les billes saines 6 des billes défectueuses 6a et éventuellement des charges antidérapantes 7. Toutefois, pour éviter des interprétations dues aux billes se trouvant à la frontière du champ étudié de l'échantillon, il est nécessaire que le champ contienne un grand nombre d'éléments du mélange billes plus charges. Ceci est obtenu en utilisant un objectif tel que le champ étudié ait un diamètre de 4 mm environ.

L'échantillon 8 étudié ayant une longueur de 12 cm par exemple et une largeur de 4 mm, ce qui correspond à une quarantaine d'images, comporte quelques milliers d'éléments du mélange constitué essentiellement de billes 6 et éventuellement de charges 7.

L'ensemble de données correspondant à une image est traité par l'organe de calcul 14 à l'aide des techniques d'analyse d'image connues et consistant en particulier en des programmes informatiques appropriés.

La figure 6 montre un exmeple d'histogramme 32 fourni par l'organe de calcul 14 et obtenu à partir d'une image d'un échantillon placé perpendiculairement à l'axe optique 25.

Cet histogramme 32 représente pour chaque niveau de gris, le nombre de points de l'image ayant ce niveau. L'histogramme 32 présente trois pics 33, 34, 35, correspondant respectivement à trois classes d'éléments de l'échantillon : le support 2, les billes saines 6 et les défauts comprenant des billes défectueuses 6a et éventuellement des charges 7. La frontière entre le support 2 et les billes saines 6 représentée par la verticale 36 est nette, tandis que la frontière entre les défauts et les billes saines 6 est plus floue.

Pour établir le pourcentage des défauts, on superpose à la classe des billes saines 6 une courbe de Gauss 37 représentée en pointillés sur la figure 7 permettant de déduire la surface relative 38 des défauts, représentée en hachuré sur la figure 7, par rapport à la surface totale des défauts et des billes saines.

On affecte ensuite le même niveau de gris à une ou plusieurs classes d'éléments, par exemple la valeur 0 aux billes et aux défauts et la valeur 63, de manière à obtenir l'équivalent d'une image contrastée dans laquelle tous les points des billes et des défauts ont la même clarté et sont nettement différenciés des point du support. On peut alors établir la surface totale apparente des éléments, billes plus charges, de l'image par comptage des points de niveau 0.

Pour déterminer la granulométrie des éléments du mélange, on élimine de l'image ainsi contrastée les éléments ayant un diamètre inférieur à un diamètre donné correspondant à une ouverture de mailles d'un tamis de l'art antérieur. Ceci se fait en déplaçant sur l'image un cercle 39 ayant un diamètre équivalent à une ouverture de tamis, en éliminant les éléments entièrement inscrits dans le cercle 39, puis en enlevant aux objets restants une couronne égale au rayon du cercle 39 et enfin, en ajoutant à ces objets une couronne égale au rayon du cercle 39.

La figure 8 montre un morceau d'image comportant trois éléments 40a, 40b et 40c représentés par des points, les éléments 40b et 40c ayant un rayon inférieur au rayon du cercle 39, et l'élément 40c apparaissant accolé à l'élément 40a. Lors du balayage de l'image par le cercle 39, l'élément 40b sera éliminé, car il est à un moment donné entièrement inscrit dans le cercle 39, mais l'élément 40c accolé à l'élément 40a n'est pas éliminé. Lorsqu'on enlève une couronne égale au rayon du cercle 39, l'ensemble des éléments 40a et 40b se transforme en un élément plus petit 40d. En ajoutant à l'élément 40d une couronne égale au rayon du cercle 39, on obtient de nouveau l'élément 40a, l'élément accolé 40c ayant disparu.

En calculant la surface apparente des éléments restants, on obtient par différence la surface apparente d'une fraction granulométrique de mélange.

Le passage de plusieurs cercles, dont le diamètre peut varier de 5 à 60 points de l'image, permet de simuler la colonne de tamis normalisés et de déterminer la proportion d'éléments correspondant à un diamètre donné, et l'utilisateur peut définir autant de tamis qu'il le souhaite. Les résultats ainsi obtenus correspondent à des surfaces. Il est possible de passer à des valeurs pondérales en tenant compte du rayon moyen des différentes fractions granulométriques, les éléments examinés étant de même nature. Les effets de bord dûs aux billes chevauchant les bords de l'image sont pris en compte au moyen de coefficients estimés par comparaison entre les résultats bruts et les courbes granulométriques obtenues par tamisage classique.

Lorsque l'échantillon est incliné de 5° par rapport à l'axe optique 25 de l'objectif 10, le support 2 apparaît sombre, les charges 7 plus claires et les billes 6 blanches. L'histogramme 32 présente trois classes d'objets. Leur séparation est faite par l'utilateur. Elle consiste à positionner deux barres verticales sur les minimums de l'histogramme. Après avoir affecté le même niveau de gris aux objets de chaque classe pour bien différencier les billes 6 des charges 7, on constate que les billes présentent sur leur pourtour des lisérés d'une largeur de un ou deux points qui se confondent avec les charges. Pour intégrer ces lisérés aux billes, on ajoute à la partie blanche des billes une couronne d'une largeur équivalente à un point. Le comptage des points correspondant respectivement aux classes des billes et des charges permet d'obtenir la surface respective des charges et des billes, ainsi que le pourcentage des charges par rapport au mélange.

Dans ce procédé, une faible quantité de défauts est considérée comme charges. Une correction proportionnelle au pourcentage de charges mesuré permet de tenir compte de ce fait. La correction est de la forme

% réel des charges = (% mesuré des charges x 1,0224) - 2, 24.

Il a été décrit ci-dessus, à titre d'exemple, le principe du traitement d'un mélange de billes et de charges destiné au saupoudrage d'un support destiné à rendre les marquages routiers visibles la nuit. Il est évident que ce procédé peut s'appliquer à tout mélange comportant des billes en verre, de petites dimensions, à condition de saupoudrer avec le mélange à contrôler un support réfléchissant permettant de rendre les billes rétroréfléchissantes.

## Revendications

1. Procédé de contrôle des mélanges de saupoudrage utilisés pour rendre les marquages routiers visibles la nuit, adhérants à la zone de marquage et constitués de billes de verre (6) et éventuellement de charges antidérapantes (7), ce procédé consistant à déterminer la granulométrie du mélange, le pourcentage des billes défectueuses (6a) par rapport aux billes saines (6) et le pourcentage des charges antidéparantes par rapport aux billes (6),
caractérisé en ce que

. on prend un échantillon (8) d'un support (2) auquel adhère le mélange à étudier, et préalablement saupoudré dudit mélange,

. on crée au moins une image de l'échantillon (8) du support (2) avec ledit mélange saupoudré, en lumière réfléchie à travers un objectif (10) de microscope (11), et

. on utilise les propriétés optiques du support (2), des billes saines (6), des billes défectueuses (6a) et des charges antidérapantes (7) et les techniques d'analyse d'image, pour déterminer la granulométrie du mélange, le pourcentage des billes défectueuses (6a) par rapport aux billes saines (6) et le pourcentage de charges antidérapantes (7) par rapport aux billes (6) à partir des images créées.

2. Procédé selon la revendication 1, caractérisé en ce que pour créer les images, on utilise un microscope (11) dont l'ouverture numérique permet de capter la quasi totalité des rayons lumineux rétroréfléchis (24) par les billes saines (6).

3. Procédé selon la revendication 2, caractérisé en ce qu'on crée des images de l'échantillon (8) en plaçant l'échantillon (8) perpendiculairement à l'axe optique de l'objectif (10) et en l'éclairant avec une intensité lumineuse telle que, sur les images, le support (2) apparait blanc, les billes saines (6) apparaissent grises, les billes défectueuses et les charges antidérapantes (7) apparaissent presque noires, et en ce qu'on traite ces images par les techniques d'analyse d'image pour déterminer le pourcentage de billes défectueuses (6a) par rapport aux billes saines (6), et la granulométrie du mélange.

4. Procédé selon l'une des revendications 2 ou 3, caractérisé en ce qu'on crée des images de l'échantillon (8) en plaçant l'échantillon (8) en inclinaison par rapport à l'axe optique (25) de l'objectif (10) et en l'éclairant avec une intensité lumineuse telle que, sur les images, les billes saines (6) apparaissent blanches, le support (2) apparaît noir, les charges antidérapantes (7) apparaissent grises et les billes défectueuses (6a) apparaissent plus claires que les charges antidérapantes, et en ce qu'on traite ces images par les techniques d'analyse d'image pour déterminer le pourcentage des charges antidérapantes (7) par rapport aux billes (6).

5. Procédé selon la revendication 4, caractérisé en ce qu'on incline l'échantillon d'un angle A égal au moins au quart de l'angle du cône de lumière défini par l'ouverture numérique du microscope.

6. Procédé selon l'une quelconque des revendications 1 à 5, caractérisé en ce qu'on utilise un microscope (11) dont l'objectif (10) permet d'étudier un champ ayant un diamètre voisin de 4mm et dont l'intensité lumineuse de l'éclairage est variable, associé à une caméra électronique (13) reliée à un organe de calcul destiné à traiter les images à l'aide de programmes appropriés d'analyse d'image.

7. Procédé selon la revendication 6, caractérisé en ce qu'on découpe l'image en un nombre de points tel que la distance séparant deux points sur l'image corresponde à une distance d'environ 15 micromètres sur l'échantillon (8).

8. Procédé selon la revendication 7, caractérisé en ce qu'on convertit chaque image prise par la caméra (13) en un ensemble de données binaires, chaque donnée binaire correspondant à un point de l'image et étant affectée d'un niveau de gris proportionnel à l'intensité lumineuse du point, le niveau de gris étant compris entre un minimum et un maximum correspondant respectivement au noir et au blanc.

9. Procédé selon la revendication 8, caractérisé en ce qu'on utilise une plage de niveau de gris compris entre un minimum de 0 et un maximum de 63.

10. Dispositif pour la mise en oeuvre du procédé selon l'une des revendications précédentes, caractérisé en ce qu'il comporte :

. un microscope (11) comprenant un porte échantillon (9), un objectif (10) situé au voisinage d'une partie du porte échantillon (9), une source lumineuse (12) permettant d'éclairer l'échantillon (8) à travers l'objectif (10), un organe de réglage de l'intensité de la source lumineuse,

. une caméra électronique (13) associée au microscope (11) et destinée à prendre des images de l'échantillon (8) porté par le porte échantillon (9),

. une carte électronique de conversion reliée à la caméra (13) et destinée à convertir chaque image prise par la caméra (13) en un ensemble de données binaires,

. un organe de calcul (14) relié à la carte électronique de conversation et destiné à traiter les ensembles de données binaires fournies par cette dernière.

FIG.1

FIG.8

FIG.2

FIG.3

## FIG. 4

## FIG.5

## FIG.6

## FIG.7